# NEUE EUROPÄISCHE PATENTSCHRIFT

(11) **EP 2 579 960 B2**
(45) Veröffentlichungstag und Bekanntmachung des Hinweises auf die Entscheidung über den Einspruch: **05.04.2017**
(45) Hinweis auf die Patenterteilung: 23.04.2014
(21) Anmeldenummer: 11726093.5
(22) Anmeldetag: 07.06.2011
(51) Int. Cl.: B01D 46/52, B01D 46/24

(54) **FILTERELEMENT, INSBESONDERE LUFTFILTERELEMENT**
FILTER ELEMENT, IN PARTICULAR AIR FILTER ELEMENT
ÉLÉMENT FILTRE, EN PARTICULIER ÉLÉMENT FILTRE À AIR

(30) Priorität: 10.06.2010 DE 102010023393
(43) Veröffentlichungstag der Anmeldung: 17.04.2013
(73) Patentinhaber: Mahle International GmbH, 70376 Stuttgart (DE)
(72) Erfinder: ENDERICH, Andreas, 73734 Esslingen (DE); JERGER, Alexander, 75173 Pforzheim (DE); TRAUB, Matthias, 71034 Böblingen (DE); VON MERKATZ, Hendrik, 71686 Remseck (DE)
(74) Vertreter: BRP Renaud & Partner mbB Rechtsanwälte Patentanwälte Steuerberater
(86) Internationale Anmeldenummer: PCT/EP2011/059407
(87) Internationale Veröffentlichungsnummer: WO 2011/154412

(56) Entgegenhaltungen:
- WO-A2-2008/106375
- DE-A1- 2 819 177
- DE-A1- 3 518 076
- DE-A1- 10 328 002
- DE-A1-102007 024 287
- DE-A1-102008 028 834
- DE-U1-202005 003 046
- JP-A- 57 018 451

## Beschreibung

Die vorliegende Erfindung betrifft ein Filterelement, insbesondere ein Luftfilterelement, umfassend eine erste und eine zweite Endscheibe sowie ein dazwischen angeordnetes Filtermedium gemäß dem Oberbegriff des Anspruchs 1. Die Erfindung betrifft außerdem ein Luftfilter mit einem derartigen Filterelement.

Aus der DE 10 2008 028 834 A1 ist ein gattungsgemäßes Filterelement bekannt, umfassend zwei Endscheiben sowie ein dazwischen angeordnetes Filtermedium. Die beiden Endscheiben sind dabei geneigt zueinander orientiert oder weisen zumindest zueinander geneigte Flächen auf, wobei das bekannte Filterelement ringförmig geschlossen ausgebildet ist. Durch geneigte Anordnung der beiden Endscheiben zueinander ist es möglich, bisher nicht erschließbare Bauräume in einem Motorraum nutzen zu können.

Aus der DE 20 2005 003 046 U1 ist ein Filterelement, insbesondere ein Luftfilterelement bekannt, umfassend eine erste Endscheibe und eine nicht gezeigte gegenüberliegende zweite Endscheibe sowie ein Filtermedium. Eine die beiden Endscheiben verbindende dritte Endscheibe ist dabei zumindest in Bereichen schräg zur ersten und/oder zweiten Endscheibe angeordnet und weist einen Stutzen auf.

Aus der DE 10 2007 024 287 A1 ist wiederum ein Filterelement mit einer ersten Endscheibe und einer zweiten Endscheibe sowie ein zwischen den einzelnen Endscheiben angeordnetes Filtermedium bekannt, wobei die beiden Endscheiben durch das Filtermedium beabstandet sind. Zusätzlich vorgesehen ist eine die beiden Endscheiben verbindende dritte Endscheibe, die einen Einlass und/oder Auslass aufweist.

Auch aus der JP 57018451 A ist ein weiteres Filterelement bekannt.

Filterelemente, insbesondere Luftfilterelemente, sind gängiger und unersetzlicher Bestandteil moderner Kraftfahrzeugmotoren und in nahezu sämtlichen Kraftfahrzeugen eingesetzt. Den Filterelementen kommt dabei die Aufgabe zu, zur Verbrennung vorgesehene Ansaugluft zu reinigen und insbesondere von Schwebstoffen zu befreien, welche bei der Verbrennung im Verbrennungsmotor unter Umständen Schäden erzeugen könnten. Betrachtet man sich jedoch moderne Motorräume, so fällt auf, dass diese immer weniger freien Bauraum aufweisen und selbst bisher nicht erschlossene, beispielsweise stark zerklüftete, Bauräume für Funktionsbauteile erschlossen werden.

Die vorliegende Erfindung beschäftigt sich mit dem Problem, für ein Filterelement der gattungsgemäßen Art eine verbesserte Ausführungsform anzugeben, die sich insbesondere durch eine hohe Flexibilität hinsichtlich ihres Einsatzes auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem üblicherweise bekannten Filterelement mit zwei Endscheiben und einem dazwischen angeordneten Filtermedium eine dritte Endscheibe vorzusehen, die die beiden anderen Endscheiben miteinander verbindet und die schräg zur ersten und/oder zweiten Endscheibe angeordnet ist und zudem noch einen Ein- und/oder Auslass aufweist. Erfindungsgemäß weist das Filterelement eine keilförmige Form auf, bei welcher die erste Endscheibe, das heißt eine obere Endscheibe, größer ausgebildet ist als die zweite Endscheibe, das heißt eine untere Endscheibe. Ein derartig ausgebildetes Filterelement ermöglicht es, bisher für derartige Filterelemente nicht zugängliche Bauräume zu erschließen und zu nutzen. Durch den an der dritten Endscheibe vorgesehenen Ein- und/oder Auslass kann zudem ein, das erfindungsgemäße Filterelement umgebende Gehäuse eines Luftfilters so ausgebildet werden, dass dessen Ver- und Entsorgung ebenfalls durch die bisher nicht erschließbaren bzw. nutzbaren, weil beispielsweise stark zerklüfteten, Bauräume geführt werden kann. Der Ein- und/oder Auslass kann beispielsweise in Form eines nach innen ragenden Ein- oder Auslassstutzens mit an die dritte Endscheibe angeformt und dadurch kostengünstig hergestellt werden. Generell ermöglicht es die dritte Endscheibe das erfindungsgemäße Filterelement und damit auch ein erfindungsgemäßes Luftfilter so an entsprechende Bauräume anzupassen, dass diese Bauraum optimierend in einem Motorraum untergebracht werden können, so dass der bisher für derartige Luftfilter vorzuhaltende Bauraum frei wird und insbesondere anders genutzt werden kann. Die dritte Endscheibe kann dabei ebenso wie die beiden anderen Endscheiben als kostengünstiges Kunststoffspritzgussteil hergestellt werden.

Bei einer vorteilhaften Weiterbildung der erfindungsgemäßen Lösung, umgreift zumindest ein Rand der dritten Endscheibe das Filtermedium und bildet dadurch eine natürliche Barriere für einen Klebstoff, der die dritte Endscheibe dicht mit dem Filtermedium verbinden soll. Ein derartiger, das Filtermedium umgreifender Rand kann selbstverständlich auch an den beiden anderen Endscheiben angeordnet sein, wobei er nicht nur eine natürliche Barriere für Klebstoff bildet und dadurch ein ungewolltes und unerwünschtes Verschmutzen des Filtermediums mit Klebstoff verhindert, sondern zugleich auch eine Anlagekontur darstellt, welche die Montage, insbesondere das Verkleben der dritten Endscheibe mit dem Filtermedium erleichtert. Ein derartiger Rand ist im selben Arbeitsschritt, das heißt zusammen mit der dritten Endscheibe einfach herzustellen, beispielsweise einfach anzuspritzen. Selbstverständlich kann anstelle des Klebstoffs auch ein anderes Verbindungsverfahren zwischen der dritten Endscheibe und dem Filtermedium vorgesehen werden, beispielsweise kann das Filtermedium in die plastifizierte dritte Endscheibe eingelassen oder eingeschäumt werden. Wichtig hierbei ist ausschließlich, dass eine unerwünschte Bypassströmung, welche das Filtermedium umgeht, zuverlässig verhindert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine teilweise transparente Darstellung eines erfindungsgemäßen Luftfilters mit einem innenliegenden Filterelement,
- Fig. 2: eine Darstellung wie in Fig. 1, jedoch aus einer anderen Perspektive,
- Fig. 3: eine Ansicht auf das erfindungsgemäße Filterelement, jedoch ohne erste (obere) und zweite (untere) Endscheibe,
- Fig. 4: eine Explosionsdarstellung des erfindungsgemäßen Filterelementes mit erster und zweiter Endscheibe sowie abgenommener dritter Endscheibe.

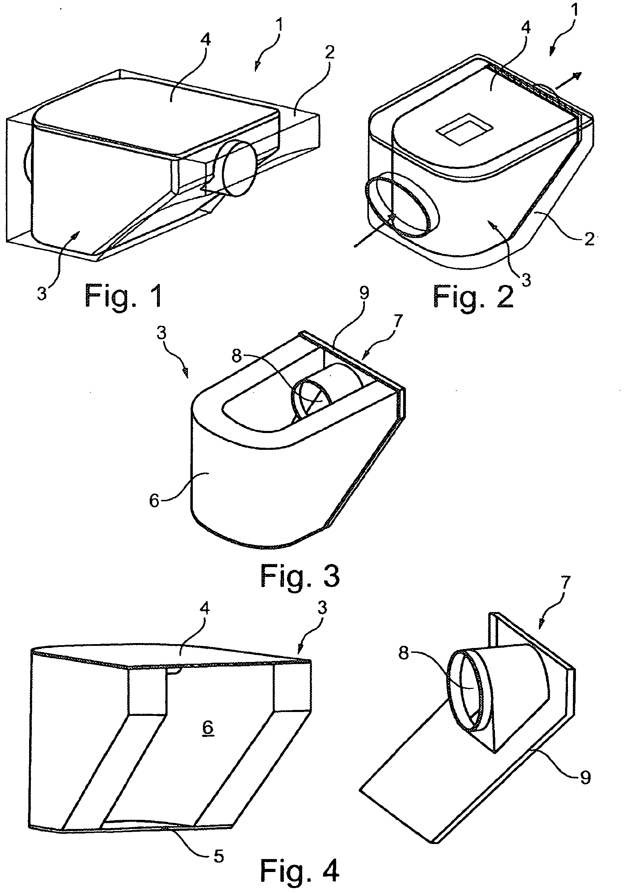

Entsprechend den Fig. 1 und 2, weist ein erfindungsgemäßes Luftfilter 1 ein Filtergehäuse 2 mit einem darin angeordneten, erfindungsgemäßen Filterelement 3 auf. Wie dabei sämtlichen Figuren 1 bis 4 zu entnehmen ist, weist das erfindungsgemäße Filterelement 3 und durch dieses auch das dieses umgebende Filtergehäuse 2 des Luftfilters 1 eine ungewöhnliche, hier eine keilförmige, Form auf, bei welcher eine erste Endscheibe 4, das heißt eine obere Endscheibe, größer ausgebildet ist als eine zweite Endscheibe 5, das heißt eine untere Endscheibe (vgl. Fig. 4). Zwischen den beiden, im Wesentlichen parallel zueinander verlaufenden Endscheiben 4 und 5 ist dabei ein Filtermedium 6, beispielsweise ein Faltenstern aus Filterpapier, angeordnet, durch welchen das zu reinigende Fluid, beispielsweise die zu reinigende Luft, beim Betrieb des Luftfilters 1 hindurch strömen muss. Die Endscheiben 4,5 sind, zumindest bereichsweise, rechtwinklig zu dem Filtermedium 6 bzw. dessen Faltenrücken angeordnet. Erfindungsgemäß ist nun eine die beiden Endscheiben 4 und 5 verbindende dritte Endscheibe 7 vorgesehen, die zumindest bereichsweise schräg zur ersten und/oder zur zweiten Endscheibe 4, 5 angeordnet ist und die zugleich einen Ein- und/oder Auslass 8 aufweist.

Das Filtermedium 6 und damit das Filterelement 3 ist an einer Seite offen ausgebildet, insbesondere hufeisenförmig, wobei diese offene Seite durch die dritte Endscheibe 7 verschlossen ist. Der Ein- und/oder Auslass 8 wird beispielsweise durch einen direkt an die dritte Endscheibe 7 angeformten Ein- und/oder Auslassstutzen gebildet, wie dies deutlich der Fig. 4, rechte Darstellung zu entnehmen ist. Um eine unerwünschte, das heißt das Filtermedium 6 umgehende Bypassströmung zuverlässig verhindern zu können, sind die drei Endscheiben 4, 5 und 7 luftdicht mit dem Filtermedium 6 verbunden, insbesondere verklebt, eingeschäumt oder plastifizierend in die jeweilige Endscheibe 4, 5, 7 eingelassen.

Wie den Fig. 3 und 4 zu entnehmen ist, weist die dritte Endscheibe 7 zwei zueinander abgewinkelt angeordnete Ebenen auf, wogegen die erste und die zweite Endscheibe 4, 5 eben ausgebildet und zudem parallel zueinander angeordnet sind. Alternativ hierzu kann selbstverständlich auch eine der Endscheiben 4 bzw. 5 zwei zueinander abgewinkelt angeordnete Ebenen aufweisen, während die andere Endscheibe 5 bzw. 4 und die dritte Endscheibe 5, 7 eben ausgebildet sind.

Zumindest ein Rand 9 der dritten Endscheibe 7 ist dabei das Filtermedium 6 umgreifend ausgebildet und bildet dadurch zugleich eine natürliche Barriere für Klebstoff, mit welchem die dritte Endscheibe 7 mit dem Filtermedium 6 verklebt werden soll. Ein derartiger Rand kann darüber hinaus als Montagehilfe genutzt werden, da er einen haptischen Anschlag bildet.

Generell weist das erfindungsgemäße Filterelement 3 eine nicht ringförmig geschlossene, sondern vielmehr offene, das heißt beispielsweise hufeisenförmige oder C-förmige Gestalt auf, wobei diese offene Seite über die dritte Endscheibe 7 verschlossen ist. In die dritte Endscheibe 7 ist erfindungsgemäß ein Ein- und/oder Auslass 8 angeordnet, wobei die dritte Endscheibe 7 beispielsweise mit Faltenflächen oder Faltenrücken des Filtermediums dicht verbunden ist. Im schräg verlaufenden Bereich des Filtermediums 6 ist die dritte Endscheibe 7 stirnseitig mit dem Filtermedium 6 verbunden. Hierbei verfügt die dritte Endscheibe 7 über zwei winklig zueinander verlaufende Flächen bzw. Bereiche. Sämtliche Endscheiben 4, 5, 7 sind nicht nur dicht mit dem Filtermedium 6, sondern zugleich auch dicht mit der jeweils benachbarten Endscheibe 7, 5, 4 verbunden.

Generell sind auch weitere Varianten denkbar:
- die dritte Endscheibe 7 ist komplett schräg, das heißt eben ausgebildet,
- die erste und/oder die zweite Endscheibe 4, 5 ist mit schrägen in Kombination mit einer ebenen dritten Endscheibe 7 vorgesehen,
- die erste und/oder die zweite Endscheibe 4, 5 weist eine Gehäuseführung, beispielsweise eine Nut oder einen Steg auf,
- die Gestalt des Filterelementes 3 ist hufeisenförmig, C-förmig oder nahezu ringförmig.

Generell lassen sich mit dem erfindungsgemäßen Filterelement 3 und mit dem erfindungsgemäßen Luftfilter 1 bisher nicht erschließbare, da stark beispielsweise zerklüftete Bauräume erschließen, wodurch eine ohnehin in modernen Motorräumen angespannte Bauraumsituation entschärft werden kann. Die dargestellten Ausführungsformen des Filterelementes 3 bzw. des Luftfilters 1 sollen dabei lediglich ein mögliches Beispiel aufzeigen, so dass die letztendlich für das Luftfilter 1 bzw. das Filterelement 3 gewählte Gestalt individuell an spezifische Bauräume anpassbar ist.

## Patentansprüche

1. Filterelement (3), insbesondere ein Luftfilterelement, umfassend eine erste Endscheibe (4), eine zweite Endscheibe (5) sowie ein zwischen den Endscheiben (4,5) angeordnetes Filtermedium (6), wobei die beiden Endscheiben (4,5) durch das Filtermedium (6) beabstandet sind, und wobei eine die beiden Endscheiben (4,5) verbindende dritte Endscheibe (7) vorgesehen ist, die zumindest in Bereichen schräg zur ersten und/oder zweiten Endscheibe (4,5) angeordnet ist und die einen Ein- und/oder Auslass (8) aufweist,
**dadurch gekennzeichnet,**
**dass** das Filterelement (3) eine keilförmige Form aufweist, bei welcher die erste Endscheibe (4), das heißt eine obere Endscheibe, größer ausgebildet ist als die zweite Endscheibe (5), das heißt eine untere Endscheibe,
wobei das Filtermedium (6) an einer Seite offen, insbesondere hufeisenförmig oder C-förmig, ausgebildet ist,
wobei die offene Seite durch die dritte Endscheibe (7) verschlossen ist, wobei die Endscheiben (4,5,7) dicht mit dem Filtermedium (6) verbunden, insbesondere verklebt, plastifizierend eingelassen oder eingeschäumt sind, wobei die erste und die zweite Endscheibe (4,5) parallel zueinander angeordnet sind,
wobei das Filtermedium (6) einen schräg verlaufenden Bereich aufweist, an dem die dritte Endscheibe (7) stirnseitig mit dem Filtermedium (6) verbunden ist.

2. Filterelement nach Anspruch 1,
**dadurch gekennzeichnet,**
**dass** die dritte Endscheibe (7) einen nach innen gerichteten angeformten Ein-oder Auslassstutzen aufweist.

3. Filterelement nach einem der Ansprüche 1 bis 2,
**dadurch gekennzeichnet,**
**dass** die dritte Endscheibe (7) zwei zueinander abgewinkelt angeordnete Ebenen aufweist, wogegen die erste und die zweite Endscheibe (4,5) eben ausgebildet sind.

4. Filterelement nach einem der Ansprüche 1 bis 3,
**dadurch gekennzeichnet,**
- **dass** die erste Endscheibe (4) zwei zueinander abgewinkelt angeordnete Ebenen aufweist, wogegen die zweite und die dritte Endscheibe (5,7) eben ausgebildet sind, oder
- **dass** die zweite Endscheibe (5) zwei zueinander abgewinkelt angeordnete Ebenen aufweist, wogegen die erste und die dritte Endscheibe (4,7) eben ausgebildet sind.

5. Filterelement nach einem der Ansprüche 1 bis 4,
**dadurch gekennzeichnet,**
**dass** zumindest ein Rand (9) der dritten Endscheibe (7) das Filtermedium (6) umgreifend ausgebildet ist und dadurch eine natürliche Barriere für Klebstoff bildet.

6. Luftfilter (1) mit einem Filterelement nach einem der Ansprüche 1 bis 5 und mit einem komplementär zum Filterelement (3) ausgebildeten Filtergehäuse (2).

## Claims

1. A filter element (3), in particular an air filter element, comprising a first end disc (4), a second end disc (5) and a filter medium (6) arranged between the end discs (4, 5), wherein the two end discs (4, 5) are spaced apart by the filter medium (6), and wherein a third end disc (7), connecting the two end discs (4, 5), is provided, which is arranged at least in regions obliquely to the first and/or second end disc (4, 5) and which has an inlet and/or outlet (8),
**characterized in**
**that** the filter element (3) has a wedge-shaped form, in which the first end disc (4), i.e. an upper end disc, is constructed larger than the second end disc (5), i.e. a lower end disc,
wherein the filter medium (6) is open on one side, in particular is constructed so as to be horseshoe-shaped or C-shaped,
wherein the open side is closed by the third end disc (7),
wherein the end discs (4,5,7) are tightly connected to the filter medium (6), in particular glued, let in in a plasticizing manner or foamed in,
wherein the first and the second end disc (4, 5) are arranged parallel to one another,
wherein the filter medium (6) has an obliquely-running region, at which the third end disc (7) is connected to the filter medium (6) on the face side.

2. The filter element according to claim 1,
**characterized in**
**that** the third end disc (7) has an inwardly-directed formed-on inlet- or outlet connection.

3. The filter element according to one of claims 1 to 2,
**characterized in**
**that** the third end disc (7) has two planes arranged angled with respect to one another, whereas the first and the second end disc (4, 5) are constructed so as to be flat.

4. The filter element according to one of claims 1 to 3,
**characterized in**
- **that** the first end disc (4) has two planes arranged angled with respect to one another, whereas the second and the third end disc (5, 7) are constructed so as to be flat, or
- **that** the second end disc (5) has two planes arranged angled with respect to one another, whereas the first and the third end disc (4, 7) are constructed so as to be flat.

5. The filter element according to one of claims 1 to 4,
**characterized in**
**that** at least one edge (9) of the third end disc (7) is constructed encompassing the filter medium (6) and thereby forms a natural barrier for adhesive.

6. An air filter (1) with a filter element according to one of claims 1 to 5 and with a filter housing (2) constructed in a complementary manner to the filter element (3).

## Revendications

1. Elément de filtre (3), notamment élément de filtre à air, comprenant une première rondelle d'extrémité (4), une deuxième rondelle d'extrémité (5) ainsi qu'un milieu de filtrage (6) disposé entre les rondelles d'extrémité (4, 5), dans lequel les deux rondelles d'extrémité (4, 5) sont espacées par le milieu de filtrage (6), et dans lequel une troisième rondelle d'extrémité (7) reliant les deux rondelles d'extrémité (4, 5) est prévue, qui est disposée au moins dans des zones en biais par rapport à la première et/ou deuxième rondelle d'extrémité (4, 5) et qui présente une admission et/ou un échappement (8),
**caractérisé en ce**
**que** l'élément de filtre (3) présente une forme cunéiforme, sur laquelle la première rondelle d'extrémité (4), c'est à dire une rondelle d'extrémité supérieure est conçue en étant plus grande que la deuxième rondelle d'extrémité (5), c'est-à-dire une rondelle d'extrémité inférieure,
dans lequel le milieu de filtrage (6) est conçu de manière ouverte sur un côté, notamment en forme de fer à cheval ou en forme de C,
dans lequel le côté ouvert est obturé par la troisième rondelle d'extrémité (7),
dans lequel les rondelles d'étanchéité (4, 5, 7) sont reliées de manière étanche au milieu de filtrage (6), notamment sont collées, plastifiée ou enrobée dans une mousse,
dans lequel la première et la deuxième rondelle d'extrémité (4, 5) sont disposées parallèlement l'une à l'autre,
dans lequel le milieu de filtrage (6) présente une zone s'étendant en biais, à laquelle la troisième rondelle d'extrémité (7) est reliée du côté frontal au milieu de filtrage (6).

2. Elément de filtre selon la revendication 1,
**caractérisé en ce**
**que** la troisième rondelle d'extrémité (7) présente un embout d'admission ou d'échappement façonné en étant dirigé vers l'intérieur.

3. Elément de filtre selon une des revendications 1 à 2,
**caractérisé en ce**
**que** la troisième rondelle d'extrémité (7) présente deux plan disposés de manière coudée l'un par rapport à l'autre, tandis que la première et la deuxième rondelle d'extrémité (4, 5) ont une configuration plate.

4. Elément de filtre selon une des revendications 1 à 3,
**caractérisé en ce**
- **que** la première rondelle d'extrémité (4) présente deux plans disposés de manière coudée l'un par rapport à l'autre, tandis que la deuxième et la troisième rondelle d'extrémité (5, 7) ont une configuration plate, ou
- **que** la deuxième rondelle d'extrémité (5) présente deux plans disposés de manière coudée l'un par rapport à l'autre, tandis que la première et la deuxième rondelle d'extrémité (4, 7) ont une configuration plate.

5. Elément de filtre selon une des revendications 1 à 4,
**caractérisé en ce**
**qu'**au moins un bord (9) de la troisième rondelle d'extrémité (7) est configuré de manière à entourer le milieu de filtrage (6) et forme ainsi une barrière naturelle pour l'adhésif.

6. Filtre à air (1) comportant un élément de filtre selon une des revendications 1 à 5 et comportant un logement de filtre (2) conçu de manière complémentaire à l'élément de filtre (3).
